# EUROPEAN PATENT SPECIFICATION

(11) **EP 3 802 324 B1**
(45) Date of publication and mention of the grant of the patent: **30.11.2022**
(21) Application number: 19749783.7
(22) Date of filing: 06.06.2019
(51) Int. Cl.: B64D 45/02, B32B 3/26

(54) **LIGHTNING STRIKE PROTECTION FILM**
BLITZSCHLAGSCHUTZFILM
FILM DE PROTECTION CONTRE LES DÉCHARGES ORAGEUSES

(30) Priority: 07.06.2018 US 201862682002 P
(43) Date of publication of application: 14.04.2021
(73) Proprietor: 3M Innovative Properties Company, Saint Paul, Minnesota 55133-3427 (US)
(72) Inventor: HEBERT, Larry S., Saint Paul, Minnesota 55133-3427 (US)
(74) Representative: Mathys & Squire
(86) International application number: PCT/IB2019/054747
(87) International publication number: WO 2019/234693

(56) References cited:
- TW-U- M 557 900
- US-A- 5 127 601
- US-A- 5 806 796
- US-A1- 2013 271 891

## Description

### Field of the Invention

Provided are articles containing electrically-conductive layers and related methods of manufacture and use. More particularly, the provided electrically-conductive layers are suitable for use in lightning strike protection films.

### Background

Thin conductive films are used in adhesives and surfacing films for composite structures, such as those found on next generation aircraft. They are used for electromagnetic interference (EMI), electromagnetic compatibility (EMC), and High Intensity Radiated Field (HIRF) shielding as well as current conduction, antenna ground planes and energy reflection.

Fiber reinforced resin matrix materials are used in airplanes, wind generators, automobiles, sporting goods, furniture, buses, trucks and other applications where stiff, light-weight materials, or consolidation of parts are beneficial. Most often the fibers are made of carbon, glass, ceramic or aramid, and the resin matrix is an organic thermosetting material. To protect against lightning damage, a manufacturer often provides a low resistance pathway throughout the metallic bulk of the external skins to move more than 300 coulombs of electrical charge in a single strike from one strike site to the other. Metallized materials have been used on the exterior surfaces of composite parts to provide the necessary electrically-conductive region. Typical metalized materials include metal woven fabric, random non-woven mat, foil, and perforated metal sheet.

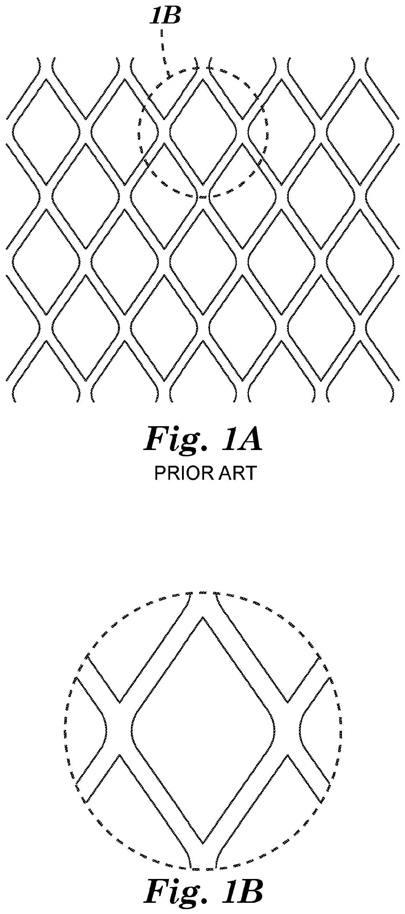

Perforated (i.e., foraminous) metal foils have become adopted in these applications because they are not only highly conductive, but also conformable and light weight. These perforated metal foils generally have thicknesses in the range of from 75 micrometers to 100 micrometers. These conductive metal foils can be slit or punched and transversely stretched to obtain foraminous conductors having holes of a marquise shape, as shown in FIGS. 1A and 1B.

Patent application US5127601 discloses a device for shielding composite material surfaces of aircraft from the destructive forces associated with lightning strikes and for protecting avionics from electromagnetic interference (EMI) and radio frequency interference (RFI) consisting of a thin metallic foil having uniformly spaced polygonal apertures formed therein. The polygonal apertures are so shaped as to provide at least one axis along which the shield material can expand or lengthen, permitting the shield material to fit the irregular or compound curved surfaces found on aircraft.

Patent application TWM557900U discloses a lightning protection structure which includes an insulation bottom layer, a graphite layer on the insulation bottom layer, an insulation shell on the graphite layer, and an electrically conductive component. A part of the electrically conductive component is disposed on the insulation shell, and another part of the electrically conductive component contacts the graphite layer.

Patent application US2013271891 discloses a lightning strike protection material that has a metallic substrate and a metallic coating atop the substrate. The material may be integrated with a structural layer, the metallic coating composition being less reactive with material of the structural layer than is the composition of the metallic substrate.

Patent application US5806796 discloses a composite laminate, an aircraft skin panel, an airfoil, an aircraft and a method of manufacturing such a composite laminate. The laminate includes at least three layers, a first layer of fiber reinforced composite material, a second layer usually metallic and usually forming a surface of the component and a third layer of impact energy-absorbing material interposed between the first and second layers, wherein the second and third layers protect the first layer from impact damage.

### Summary

Opportunities remain in further improving upon the level of lightning strike protection provided by a film having a given weight per unit area. New foraminous conductive films used for protecting composite structure from lightning strike damage are herein described. These conductive films are characterized by hexagonal shaped holes positioned relative to each other in a hexagonal arrangement. It was discovered that this configuration provides greater protection than circular holes for an equivalent conductor weight. Expressed another way, these films can provide equivalent lightning strike protection at a reduced weight.

In a first aspect, a lightning strike protection film is provided. The lightning strike protection film comprises: an electrically-conductive layer having a plurality of perforations arranged in a hexagonal lattice pattern, wherein the perforations are generally hexagonal; a support layer (110, 310, 410) coupled to the electrically-conductive layer (100, 300, 400); and
a carrier layer contacting the support layer wherein the carrier layer is permeable and further wherein the carrier layer is disposed between the electrically-conductive layer and an outer surface of the support layer.

In a second aspect, a protected assembly is provided, comprising the lightning strike protection film coupled to a non-conductive or semi-conductive substrate.

In a third aspect, a method of making a lightning strike protection film is provided comprising: providing an electrically-conductive layer having a plurality of perforations arranged in a hexagonal lattice pattern, wherein the perforations are generally hexagonal; providing a carrier layer on one side of the electrically-conductive layer, wherein the carrier layer is permeable;
coating a liquid curable resin onto the electrically-conductive layer and the carrier layer to at least partially embed the electrically-conductive layer and the carrier layer in the liquid resin; and
and hardening the liquid curable resin to provide a support layer coupled to the electrically-conductive layer wherein the carrier layer is disposed between the electrically-conductive layer and an outer surface of the support layer (110, 310, 410)..

In a fourth aspect, a method of protecting a substrate from lightning strike damage using the lightning strike protection film, the method comprising: providing an adhesive on either the substrate or a major surface of the lightning strike protection film; and using the adhesive to bond the lightning strike protection film to the substrate.

In a fifth aspect, a method of protecting a substrate from lightning strike damage using the lightning strike protection film, the method comprising: providing a carrier layer of curable material; adhering the lightning strike protection film to a tool or pre-cured substrate composite material; and curing the composite material and carrier layer concurrently to form a protected substrate.

### Brief Description of the Drawings

FIG. 1A is a fragmentary plan view of a prior art electrically-conductive layer.
FIG. 1B is an inset showing a portion of in FIG.1A magnified for clarity.
FIG. 2 is a fragmentary plan view of an electrically-conductive layer according to one exemplary embodiment.
FIG. 3 is a side, cross-sectional view of a lightning strike protection film using the electrically-conductive layer of FIG. 2.
FIG. 4 is a side, cross-sectional view of the lightning strike protection film of FIG. 3 bonded to a substrate.
FIGS. 5 and 6 are side, cross-sectional views of lightning strike protection films according to other exemplary embodiments using the electrically-conductive layer of FIGS. 2-4 and bonded to respective substrates.
FIGS. 7 and 8 are fragmentary plan views of electrically-conductive layers presented for comparison to the electrically-conductive layers of the provided disclosure.

Repeated use of reference characters in the specification and drawings is intended to represent the same or analogous features or elements of the disclosure. Numerous other modifications and embodiments can be devised by those skilled in the art, which fall within the scope and spirit of the principles of the disclosure. The figures are not drawn to scale.

### DEFINITIONS

As used herein:
"average" means number average, unless otherwise specified;
"cure" refers to exposing to radiation in any form, heating, or allowing to undergo a chemical reaction, such as a crosslinking reaction, resulting in hardening or an increase in viscosity;
"diameter" refers to the longest dimension of a given object or surface;
"polymer" refers to a molecule having at least one repeating unit;
"solvent" refers to a liquid that can dissolve a solid, liquid, or gas;
"substantially" means to a significant degree, as in an amount of at least 50%, 60, 70, 80, 90, 95, 96, 97, 98, 99, 99.5, 99.9, 99.99, or 99.999%, or 100%; and
"thermoset" refers to a composition that undergoes a crosslinking reaction or reaction product thereof;
"thickness" means the distance between opposing sides of a layer or multilayered article.

### Detailed Description

As used herein, the terms "preferred" and "preferably" refer to embodiments described herein that can afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the term "comprises" and variations thereof do not have a limiting meaning where these terms appear in the accompanying description. Moreover, "a," "an," "the," "at least one," and "one or more" are used interchangeably herein. Relative terms such as left, right, forward, rearward, top, bottom, side, upper, lower, horizontal, vertical, and the like may be used herein and, if so, are from the perspective observed in the particular drawing. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described relating to the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Where applicable, trade designations are set out in all uppercase letters.

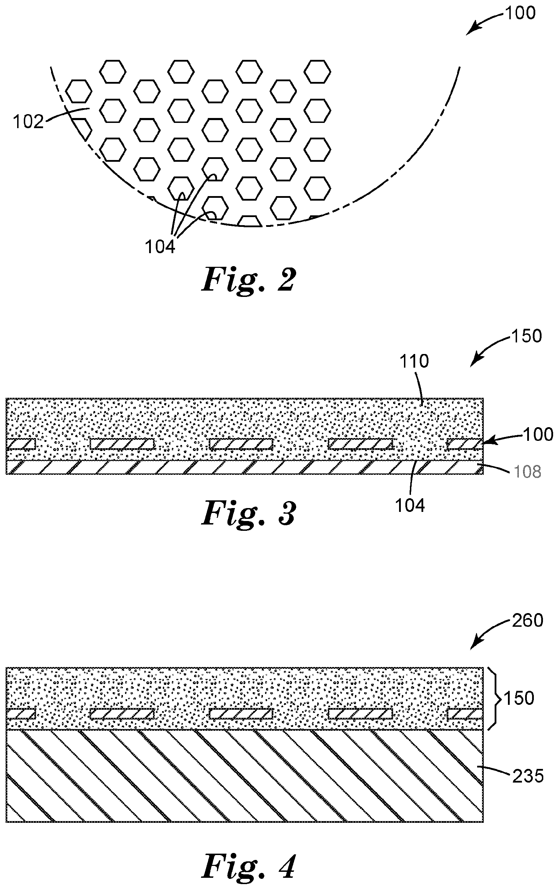

An exemplary lightning strike protection film uses the electrically-conductive layer shown in FIG. 2, hereinafter referred to by the numeral 100. The electrically-conductive layer 100 is comprised of a generally planar foil 102, characterized by opposing major surfaces that are generally both planar and parallel with each other.

The foil 102 can have any suitable thickness that provides for both capacity to carry an electrical current while retaining conformability and a low basis weight. The foil 102 can have an average thickness of from 0.001 micrometers to 100 micrometers, from 0.01 micrometers to 50 micrometers, from 0.1 micrometers to 30 micrometers, or in some embodiments, less than, equal to, or greater than 0.001 micrometers, 0.005, 0.01, 0.05, 0.1, 0.2, 0.5, 1, 2, 5, 10, 30, 50, 70, or 100 micrometers.

The foil 102 is preferably made from a conductive material, typically a metallic material, and most typically a metal. In some embodiments, the metal has a favorable balance of properties including high electrical conductivity, low density and high resistance to corrosion. Useful metals include, without limitation, copper, aluminum, nickel, zinc, silver, gold, titanium, chromium, platinum, beryllium, magnesium, iron, palladium, hafnium, indium, lanthanum, molybdenum, neodymium, silicon, germanium, strontium, tantalum, tin, titanium, tungsten, vanadium, yttrium, zirconium and the like, as well as combinations thereof disposed as alloys and/or blends and/or layers.

A plurality of perforations 104 extends through the foil 102 from one major surface to the other. In some embodiments, the perforations 104 extend through the foil 102 along a direction generally perpendicular to the plane of the foil 102. As shown, the perforations 104 are hexagonal in shape and are arranged relative to each other according to a hexagonal lattice. When arranged in a hexagonal lattice as shown in FIG. 2, the perforations 104 are staggered in a close-packed arrangement.

In some embodiments, the hexagonal perforations 104 and the hexagonal lattice are both characterized by regular hexagons, or six-sided polygons in which all sides are substantially equal to each other in length and all internal angles are also substantially equal to each other. This configuration provides an electrically-conductive layer 100 made up of struts that are generally uniformly shaped. The struts are of generally uniform length and cross-section. It was discovered that this configuration of electrically-conductive struts can provide a superior level of protection against a lightning strike for a given conductor weight, compared with conventional electrically-conductive layers.

The transverse size of the perforations 104 (along the plane of the foil 102) is not particularly limited, but should be large enough for the struts to have sufficient capacity to carry an electrical current in the event of a lightning strike. The perforations 104 can have an average circumscribed diameter (i.e., lateral size) of from 100 micrometers to 5000 micrometers, from 500 micrometers to 3000 micrometers, from 1000 micrometers to 2000 micrometers, or in some embodiments, less than, equal to, or greater than, 50 micrometers, 100, 200, 300, 400, 500, 700, 1000, 1200, 1500, 1700, 2000, 2500, 3000, 3500, 4000, 4500, or 5000 micrometers.

The size of the perforations 104 relative to the lattice spacing further defines the open area of the electrically-conductive layer 100, expressed as a percentage of a normalized area of the electrically-conductive layer 100. The electrically-conductive layer 100 can have an open area of from 10% to 95%, from 15% to 75%, from 20% to 60%, or in some embodiments, less than, equal to, or greater than 10%, 15, 20, 25, 30, 35, 40, 45, 50, 55, 60, 65, 70, 75, 80, 85, 90, or 95%.

The electrically-conductive layer 100 can also be characterized by its basis weight, or weight of the conductor per unit area. Like the perforation size, basis weight can be judiciously chosen to balance the overall mechanical properties and electrical properties of the electrically-conductive layer 100. The basis weight can be from 0.01 g/m² to 900 g/m², from 1 g/m² to 600 g/m², from 13 g/m² to 400 g/m², or in some embodiments, less than, equal to, or greater than, 0.01 g/m², 0.05, 0.1, 0.2, 0.5, 0.7, 1, 2, 5, 7, 10, 13, 15, 20, 25, 30, 35, 40, 45, 50, 60, 70, 80, 90, 100, 150, 200, 250, 300, 350, 400, 450, 500, 550, 600, 650, 700, 750, 800, 850, or 900 g/m².

Alternatively, the perforations 104 may each have the shape of an irregular hexagon, where the length of the hexagon along at least one direction is shortened or elongated relative to the length of the hexagon along a different direction (or where at least one internal angle is significantly different from another internal angle). In some embodiments, the hexagon reflects the shape of a cross-sectional surface of a hexagonal prism, where the normal of the cross-sectional plane forms non-zero angle with the longitudinal axis of the hexagonal prism.

Altering the length of the conductive struts, or angles formed therebetween, can provide for enhanced electrical conductivity along one direction relative to another direction, where such properties may be desired for a given application.

FIG. 3 shows an exemplary lightning strike protection film 150 in which the electrically-conductive layer 100 is coupled to a support layer 110. In some embodiments, the support layer 110 is comprised of a polymeric material. Optionally and as shown, the support layer 110 is a continuous layer. By extending across and contacting the electrically-conductive layer 100, the support layer 110 enhances the mechanical strength of the lightning strike protection film 150, allowing it to be easily handled and applied to a substrate without damage. The support layer 110 may be a single layer or be comprised of two or more layers, where adjacent layers directly contact each other.

Optionally and as shown, the electrically-conductive layer 100 is fully embedded within the support layer 110. In this embedded relation, the support layer 110 extends through the perforations 104 with the electrically-conductive layer 100 in an interpenetrating fashion. This arrangement can be advantageous because the support layer 110 can serve to encapsulate and protect the electrically-conductive layer 100 from damage attributable to weathering and/or abrasion on the exposed surface of the lightning strike protection film 150.

Alternatively, the electrically-conductive layer 100 may be only partially embedded within the support layer 110, such that at least a portion of the electrically-conductive layer 100 is exposed at the surface of the lightning strike protection film 150.

One or more additional layers are optionally disposed on the electrically-conductive layer 100 or support layer 110. The one or more additional layers could each have a composition the same as, or different from, that of the support layer 110.

The support layer 110 can be made of any polymer having sufficient flexibility to bend and conform to the contours of the substrate. The support layer 110 can be made from either a thermoplastic or thermoset polymer and may additionally contain particulate, fibrous or shaped fillers.

In some embodiments, the support layer 110 is a curable thermoset polymer that is also dimensionally stable. The support layer 110 may also display significant tack and can be itself a pressure-sensitive adhesive. Having such properties can enable the lightning strike protection film 150 to be adhered directly to a surface, such as that of a tool or pre-cured substrate. The pre-cured substrate can be, for instance, a primary aircraft structure.

The tool can provide a shaped surface on which the support layer 110 and an uncured or partially-cured pre-impregnated composite material, such as a fiber-reinforced composite material, can be disposed and cured. Once shaped, the support layer 110 and uncured or partially-cured composite material can be cured concurrently by autoclaving or other suitable process.

Curable thermoset compositions are chemical compounds capable of undergoing a crosslinking reaction. The inclusion of a suitable initiator and/or catalyst in the curable thermoset composition can enable the composition to be crosslinked upon, for example, heating or irradiation with actinic radiation (e.g., visible or ultraviolet light).

Any suitable curable thermoset or thermoplastic composition may be used. Examples include, but are not limited to, epoxies, phenolics, phenols, cyanate esters, polyimides (e.g., bismaleimide and polyetherimides), polyesters, benzoxazines, polybenzoxazines, polybenzoxazones, polybenzimidazoles, polybenzothiazoles, polyamides, polyamidimides, polysulphones, polyether sulphones, polycarbonates, polyethylene terephthalates, cyanates, cyanate esters; and polyether ketones (e.g., polyether ketone, polyether ether ketone, polyether ketone ketone and the like), combinations thereof, and precursors thereof.

In some embodiments, support layer 110 includes a fluoropolymer or fluoroelastomers cured from precursor compositions comprised of polymerized monomer units, where the monomer units comprise at least one of perfluorinated olefins, nonfluorinated olefins, chlorotrifluoroethylene, tetrafluoroethylene, vinylidene fluoride, hexafluoropropylene, ethylene, propylene, perfluorinated alkyl vinyl ethers, perfluorinated allyl ethers, vinyl fluoride, and trifluoroethylene and combinations thereof.

Support layer 110 can be made from a polysulfide, polythioether, or copolymer thereof. In some embodiments, the support layer 110 can be made by mixing two or more components with each other and curing in situ. The composition may include, for example, a first component that is a polysulfide, a polythioether, a copolymer thereof, or a combination thereof. A second component can include one or more glycol di((C1-C20) hydrocarbon) carboxylate esters, wherein at each occurrence the (C1-C20) hydrocarbon is independently substituted or unsubstituted. The second component can also include an oxidizing agent.

The weight ratio of the first component to the second component can be any suitable ratio, such as 2:1 to 14:1, or 9:1 to 11:1, or 2:1 or less, or less than, equal to, or greater than 3:1, 4:1, 5:1, 6:1, 7:1, 8:1, 9:1, 9.5:1, 10:1, 10.5:1, 11:1, 12:1, 13:1, or 14:1 or more.

The first component can be any suitable proportion of the support layer 110. The first component can be, for example, 80 wt% to 95 wt% of the adhesive, 90 wt% to 93 wt%, 80 wt% or less, or less than, equal to, or greater than 81 wt%, 82, 83, 84, 85, 86, 87, 88, 89, 90, 90.5, 91, 91.5, 92, 92.5, 93, 94 wt%, or 95 wt% or more. The second component can be any suitable proportion of the adhesive, such as 5 wt% to 20 wt% of the adhesive, or 7 wt% to 10 wt% of the adhesive, or 5 wt% or less, or less than, 30 equal to, or greater than 6 wt%, 7, 8, 9, 10, 11, 12, 14, 16, 18, or 20 wt% or more.

One-part compositions are also possible, in which the polysulfide, polythioether, or copolymer thereof is cured by actinic radiation. For example, a polythioether polymer network can be obtained by radiation curing a composition that includes: a) at least one dithiol monomer; b) at least one diene monomer; c) at least one multifunctional monomer having at least three ethenyl groups; and d) at least one photoinitiator. As another example, a polythioether polymer network can be radiation-cured from a dual-cure composition including: a) a dithiol monomer; b) a diene monomer; c) a radical cleaved photoinitiator; d) a peroxide; and e) an amine; where the peroxide and amine together are a peroxide-amine redox initiator.

Further details concerning radiation-cured polysulfides, polythioethers, and copolymers thereof are described in U.S. Patent No. 9,650,150 (Zook et al.), U.S. Patent Publication No. 2016/0032058 (Ye et al.) and International Patent Publication No. WO 2016/106352 (Ye et al).

Examples of polysulfides, polythioethers, and copolymers thereof include polymers including repeating units that include a sulfide (e.g., -S-S-) or a thioether (e.g., -thio(C1-C5)alkylene)-) moiety therein, and including pendant or terminal mercaptan (i.e.,-10 S-H) groups. Examples of polysulfides can include polymers formed by condensing bis(2-chloroethoxy)methane with sodium disulfide or sodium polysulfide. Examples of polythioethers include polymers formed via condensation reaction of, for example, 2-hydroxyalkyl sulfide monomers such as those described in U.S. Patent No. 4,366,307 (Singh et al.) and those formed via addition reactions of dithiols and divinylethers such as those described in U.S. Patent No. 6,486,297 (Zook et al). The polysulfide, polythioether, 20 or copolymer thereof can have any suitable molecular weight, such as a number-average molecular weight of 500 g/mol to 5,000 g/mol, or 500 g/mol to 1,500 g/mol, or 500 g/mol or less, or less than, equal to, or greater than 600 g/mol, 700, 800, 900, 1,000, 1,100, 1,200, 1,300, 1,400, 1,500, 1,600, 1,800, 2,000, 2,250, 2,500, 2,750, 3,000, 3,500, 4,000, 4,500, or 5,000 g/mol or more. The polysulfide, polythioether, copolymer thereof, or mixture thereof can have any suitable mercaptan content based on the overall weight of the liquid polysulfide, such as 0.1 wt% to 20 wt%, 1 wt% to 10 wt%, 1 wt% to 6 wt%, or 1 wt% to 3 wt%, or 0.1 wt% or less, or less than, equal to, or greater than 0.5 wt%, 1, 3, 4, 5, 6, 7, 8, 9, 10, 12, 14, 16, 18, 25 or 20 wt% or more. The polysulfide, polythioether, or copolymer thereof, or mixture thereof can form any suitable proportion of the first component, such as 40 wt% to 100 wt% of the first component, 50 wt% to 80 wt%, or 40 wt% or less, or less than, equal to, or greater than 45 wt%, 50, 55, 60, 65, 70, 75, 80, 85, 86, 88, 90, 91, 92, 93, 94, 95, 96, 97, 98, 99, 99.9 wt%, 30 or 99.99 wt% or more. The polysulfide, polythioether, copolymer thereof, or mixture thereof can form any suitable proportion of the layer, such as 30 wt% to 95 wt% of the adhesive, or 40 wt% to 70 wt%, or 40 wt% or less, or less than, equal to, or greater than 45 wt%, 50, 55, 60, 65, 70, 72, 74, 76, 78, 80, 81, 82, 83, 84, 85, 86, 87, 88, 89, 90, 91, 92, 93, 94, or 95 wt% or more.

Where the support layer 110 is made from a curable composition, said support layer 110 can be cured either before or after it is adhered to the substrate. In some embodiments, the support layer 110 is a B-stage curable composition coated onto a release surface (such as that of a release liner) in liquid form and then hardened to form a tacky, curable film. The B-stage curable composition can be coated by knife coating, extrusion, spraying, or any other known coating method. Further, B-stage curable composition can be hardened by a drying process (i.e., removing of a solvent from the composition) or by cooling from a polymer melt.

In certain applications, it may be efficient to directly coat the curable composition of the support layer 110 onto a substrate and subsequently cure the curable composition to obtain a finished lightning strike protection film bonded assembly.

The support layer 110 need not be tacky. If the support layer 110 is not tacky, then a separate adhesive layer, such as a pressure-sensitive adhesive, can be disposed on a major surface of the support layer 110 to enable the lightning strike protection film to be adhered to the substrate. In other embodiments, the support layer 110 contains a two-part curable epoxy adhesive that is mixed and cured at either ambient temperature or elevated temperatures.

The support layer 110 or a separate adhesive layer can be comprised of any of the compositions described for the base layer, including curable thermosets, thermoplastics, polysulfides, polythioethers, and fluoroelastomers, as well as acrylic, silicone, and urethane pressure sensitive adhesives. Suitable pressure-sensitive adhesives and methods for their preparation are disclosed in U.S. Pat. No. 6,475,616 (Dietz et al).

The support layer 110 can have any suitable thickness to sufficiently reinforce and protect the electrically-conductive layer 100 while fulfilling the need for high overall flexibility and low basis weight. The support layer 110 can have an average thickness of from 0.15 millimeters to 50 micrometers, from 0.25 millimeters to 25 micrometers, from 0.4 millimeters to 2 micrometers, or in some embodiments, less than, equal to, or greater than 0.1 micrometers, 0.15, 0.2, 0.3, 0.4, 0.5, 0.7, 1, 2, 5, 10, 15, 20, 25, 30, 40, 50, 70, 100, 200, 500, 700, 1000, 1100, 1200, 1300, 1400, 1500, 1600, 1700, 1800, 1900, or 2000 micrometers.

Optionally and as shown in FIG. 3, one of both major surfaces of the support layer 110 contacts a release liner 108 to facilitate storage and handling of the lightning strike protection film 150. The release liner 108 extends across one or both major surfaces of the support layer 110, and can be peeled away before, during, or after application of the lightning strike protection film 150 to a substrate.

FIG. 4 shows the lightning strike protection film 150 after it has been adhered to a substrate 235 and subsequently cured to obtain a protected assembly 260. The substrate 235 is generally a non-conductive or semi-conductive substrate. Non-conductive or semi-conductive substrates include composite materials that are prone to damage from lightning strikes. These include primary aircraft structures as well as stationary assemblies, such as windmills. Common composite materials include fiber-reinforced composite materials, such as carbon fiber-reinforced composite materials.

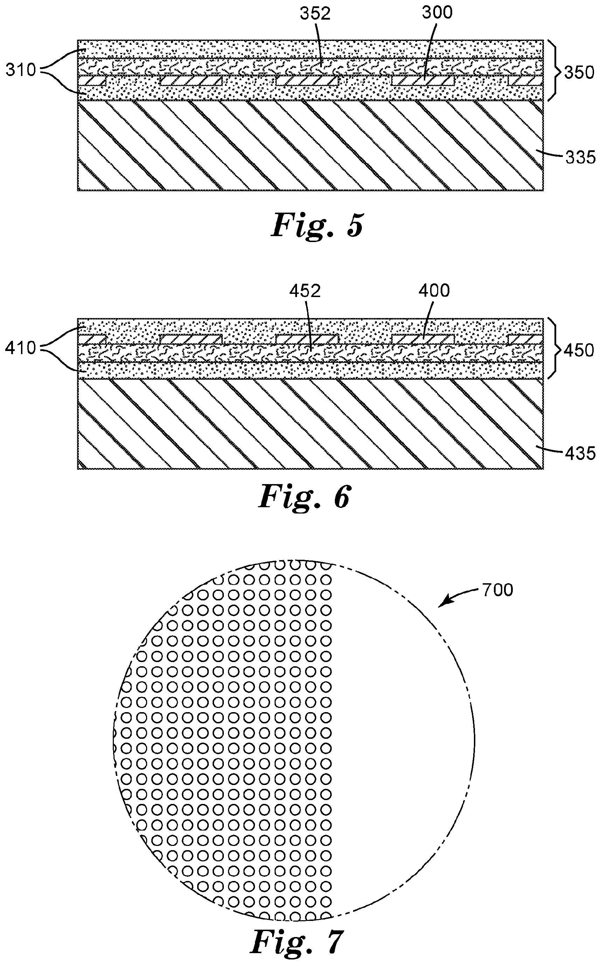

FIGS. 5 and 6 represent lightning strike protection films 350, 450 disposed on respective substrates 335, 435. Each lightning strike protection film 350, 450 includes a permeable carrier layer 352, 452 disposed on one or both sides of respective electrically-conductive layers 300, 400.

As shown, the carrier layer 352, 452 is embedded within the support layer 310, 410 of the respective lightning strike protection films 350, 450. In some embodiments, the composition of the support layer 310, 410 is entrained within the carrier layer 352, 452.

In FIG. 5, the carrier layer 352 is disposed on a major surface of the electrically-conductive layer 300 that faces away from the substrate when applied, such that the carrier layer 352 is disposed between the electrically-conductive layer 300 and an outer surface of the lightning strike protection film intended to be bonded to a substrate. In FIG. 6, the carrier layer 452 is disposed on a major surface of the electrically-conductive layer 400 that faces toward the substrate when applied, such that the carrier layer 452 is disposed between the electrically-conductive layer 100 and the substrate.

Optionally but not shown, a carrier layer can be disposed on both major surfaces of the electrically-conductive layer 300, 400. Optionally but not shown, the carrier layer(s) are not in contact with the electrically-conductive layer 300, 400.

The carrier layer 352, 452 may be made from a woven or non-woven material. Woven materials include, for example, scrims and other textile materials constructed from interlaced threads or strips of material. Suitable scrims may also be formed from intersecting fibers that are melted or otherwise adhered together at the intersection points.

Nonwovens, unlike wovens, are made from long fibers bonded together by chemical, mechanical, heat or solvent treatment. In exemplary embodiments, the fibers may be melt blown, in which blown fibers bond to each other by mutual melting at a sufficiently high temperature. Suitable melt blown fiber materials include aliphatic polyester materials, including polylactic acid, polyglycolic acid, poly(lactic-co-glycolic acid), polybutylene succinate, polyhydroxy-butyrate, polyhydroxyvalerate, and blends and copolymers thereof. Nonwovens can also be made from nylon, glass, carbon, and/or contain fibers that are metallized.

The carrier layer serves several useful functions. First, and like the support layer, the carrier layer increases the structural integrity of the overall lightning strike protection film, especially along transverse directions. This can help prevent distortion or tearing of the lightning strike protection film when it is handled. Second, a carrier layer embedded in the support layer and disposed alongside the electrically-conductive layer can act as a barrier preventing the electrically-conductive layer from protruding through the exposed support layer of the lightning strike protection film, where it can be easily damaged. Finally, the carrier layer can act as a spacer that displaces the electrically-conductive layer a certain distance either from the exposed major surface of the lightning strike protection film or from the substrate to which the lightning strike protection film is bonded.

Further options and advantages associated with the carrier layer, and other lightning strike protection film configurations, are described in International Patent Publication No. WO2018/063970 (Hebert et al.).

In general, the lightning strike protection film can be made and assembled from its constituent layers using any known manufacturing method. The electrically-conductive layer can be perforated using mechanical methods such as punching, or non-mechanical methods such as laser cutting the hexagonal perforations into a continuous sheet of the electrically-conductive material.

Alternatively, the electrically-conductive layer can also be made directly without need for a perforation step. This can be accomplished, for instance, by providing discontinuous and generally hexagonal mask features on a release surface, depositing an electrical conductor through the mask features and onto the release surface, and finally separating the electrical conductor deposited on the release surface from the mask features to provide the electrically-conductive layer. These methods are described in more detail in co-pending U.S. Application No. 62/658,823 (Hebert et al.).

The electrically-conductive layer can be coupled to the support layer using any known method. In an exemplary embodiment, the support layer can be made by knife coating a viscous solution of a liquid curable resin, such as an epoxy resin, onto a release surface, and then hardening the mixture to obtain a free-standing layer that is still curable. Here, hardening of the mixture reflects the removal of some or all volatile solvents from the liquid curable resin. If the liquid resin is coated at elevated temperatures, hardening may be accomplished by cooling the resin to ambient temperatures. The free-standing layer can then be laminated to the electrically-conductive layer to provide the finished product.

In some embodiments, the support layer is laminated to only one major surface of the electrically-conductive layer. As an alternative, support layers can be disposed on both major surfaces of the electrically-conductive layer in a sandwich construction whereby the electrically-conductive layer is fully embedded.

In an alternative method, the liquid curable resin is directly coated onto the electrically-conductive layer, whereby the electrically-conductive layer is at least partially embedded. The curable resin can then be hardened, for example by cooling or drying. Once coated and hardened, the embedded construction can be collectively pressed together between release liners to obtain the lightning strike protection film. The release liners can be later stripped off from the lightning strike protection film before the film is applied.

Useful methods can incorporate at least one permeable carrier layer. For example, a liquid curable resin can be coated onto a release liner (or other release surface) and the liquid curable resin and release liner collectively laminated onto a permeable carrier layer and an electrically-conductive layer, in that order. The result is a multilayered construction where the electrically-conductive layer can be partially or fully embedded in the liquid curable resin, while the permeable carrier layer is fully embedded in the liquid curable resin between the release liner and the electrically-conductive layer. The liquid curable resin can then be hardened to provide a support layer coupled to both the permeable carrier layer and electrically-conductive layer.

When applying the film to the substrate, the support layer may be directly adhered to the substrate where the support layer is tacky. If the support layer is comprised of a one-part curable composition, such a one-part curable epoxy resin, then the support layer can then be cured to secure the lightning strike protection film to the substrate. Such curing can take place, for example, by heating the support layer or by exposing the support layer to actinic radiation.

Where the support layer is not tacky, a separate adhesive can be provided on either the substrate or a major surface of the lightning strike protection film and used to adhere the lightning strike protection film to the substrate. The adhesive may, in some cases, be disposed directly on the electrically-conductive film. Such adhesive may be a pressure-sensitive adhesive, as described earlier, or a liquid adhesive that is subsequently cured.

In yet another exemplary method, the lightning strike protection film can be prepared by coating the support layer in liquid form directly onto the substrate to be protected. The electrically-conductive film can be applied before or after the coating of the support layer. The support layer can then be cured to obtain the finished lightning strike protection film.

Fiber-reinforced composite materials can be made using any known method, including a resin transfer molding process, filament winding process, or pultrusion process. In an exemplary method, the provided lightning strike protection film contains a B-stage support layer and is disposed on a preform that has not yet been cured, after which heat and/or pressure is applied to cure the support layer and preform together.

The lightning strike protection film can be mounted on its substrate either manually or using an automated method. Because a carrier layer imparts a high tensile strength and modulus to the film in the pre-cured state, it can enable lightning strike protection films to be used in automatic tape layup ("ATL") and automatic fiber placement ("AFP") machines.

As previously mentioned, incorporating an electrically-conductive layer having a plurality of perforations arranged in a hexagonal lattice pattern, wherein the perforations are generally hexagonal, provides substantial and unexpected technical benefits. These benefits include, for example, lightning strike protection films that display greater protection than conventional lightning strike protection films that use electrically-conductive layers perforated with other shapes. These benefits also include the ability to reduce the weight of the lightning strike protection film while achieving equivalent or better lightning strike protection.

### EXAMPLES

Objects and advantages of this disclosure are further illustrated by the following non-limiting examples, but particular materials and amounts thereof recited in these examples, as well as other conditions and details, should not be construed to unduly limit this disclosure.

Unless otherwise noted, all parts, percentages, ratios, etc. in the Examples and the rest of the specification are by weight.

**TABLE 1. Materials**

| **Designation** | **Description** | **Source** |
|---|---|---|
| M21/34%/UD194T800S | A uni-directional carbon fiber epoxy prepreg tape available under the trade designation "M21/34%/UD194T800S" | Hexcel Corp., Stamford, CT |
| AF 535XS LIGHTNING PROTECTION SURFACER | A structural adhesive film available under the trade designation "AF 535XS LIGHTNING PROTECTION SURFACER" | 3M Co., St. Paul, MN |
| FREKOTE 700NC | A mold release material available under the trade designation "FREKOTE 700NC" | Henkel, Dusseldorf, Germany |
| OPTIMAT T2570 | A polyester veil available under the trade designation "OPTIMAT T2570" | Technical Fiber Products, Schenectady, NY |
| Aviox CF PRIMER 37124 | A primer available under the trade designation "Aviox CF PRIMER 37124" | AkzoNobel, Amsterdam, Netherlands |
| Aviox FINISH 77702 URETHANE PAINT | A urethane paint available under the trade designation "Aviox FINISH 77702 URETHANE PAINT" | AkzoNobel, Amsterdam, Netherlands |
| TECHNIC 89 | Tin sulfate plating composition, available under the trade designation "TECHNIC 89" | Technic, Inc., Cranston, RI |
| DP100 | 2-part epoxy adhesive, available under the trade designation "3M SCOTCH-WELD EPOXY ADHESIVE DP100" | 3M Co., St. Paul, MN |

### Preparative Example - Preparation of Consolidated Composite Panel

A consolidated composite panel 10.5 inches by 10.5 inches (approximately 27 cm by 27 cm) was prepared by laminating together 12 plies of M21/34/0/UD194T800S uni-directional carbon fiber epoxy prepreg tape oriented as (45,0,135,90,0,90)s (for nomenclature explanation, see Composites Materials Handbook MIL-HDBK-17 Volume 2, June 17, 2002, Section 1.6, page 1-20 to page 1-22, "Material Orientation Codes"), vacuum consolidating each ply at room temperature and 25 inches of mercury (84.7 kPa) for approximately 5 to 10 minutes to secure the sheets together as a consolidated composite panel.

### Example 1 (EX-1)

### Preparation of conductor layer

A foraminous copper foil was prepared using processes described in Example 9 of U.S. Patent Application No. 62/658823 (Hebert et al.), filed April 17, 2018. The surface of a 0.75 mil (19 micrometers) thick copper foil was immersed in DOW PREPOSIT 748, a persulfate & sulfuric acid etch, to remove surface oxides and contaminants, and then rinsed with deionized water. The copper foil was then immersed in a second solution composed of deionized water, 9% by volume (v%) hydrogen peroxide, and 0.5 v% phosphoric acid for a period of 2 minutes and rinsed in deionized water.

This copper foil seed layer was coated in selected regions with a masking agent. 3M DP 100 was used as a quick setting masking agent, to create a patterned surface. The exposed surface of this copper foil was then treated and plated as follows.

A one-liter aqueous copper plating solution was prepared by mixing deionized water 60% by volume, 2.6oz (approximately 74 grams) copper sulfate pentahydrate, and sulfuric acid to make 1 liter. A one liter aqueous tin plating solution was prepared by filtering 1 liter of TECHNIC 89 matte tin through a 1 micrometer polypropylene filter for 12 hours.

The copper foil was electroplated with tin by immersing in the tin plating solution at a current density of 12 A/ft² for approximately 40 seconds, while agitating the plating solution. After rinsing, and without drying, the copper foil was immersed in the copper plating solution for approximately 77 minutes at a current density of 10 A/ft². After rinsing, and without drying, the copper foil was immersed in the tin plating solution at a current density of 12 A/ft² for approximately 40 seconds.

The plated foil was then gently removed from the copper substrate surface, resulting in a delicately thin conductor having a hexagonal penetration shape (i.e., perforations), conductor open area, conductor thickness, and conductor weight (in grams per square meter, or "gsm") according to EX-1 in Table 2. Referring to FIG. 2, each side of the hexagonal shapes in Example 1 (i.e., 104 in FIG. 2) had a typical length of 0.0577 inch (approximately147 mm), with a typical spacing between adjacent hexagonal shapes of 0.0741 inch (approximately 188 mm).

**TABLE 2. Sample Construction Summary**

| **Sample** | **Conductor Penetration Shape** | | **Conductor Open Area (%)** | **Conductor Thickness (micrometers)** | **Conductor Weight (gsm)** | **Paint Thickness (micrometers)** |
|---|---|---|---|---|---|---|
| CE-1 | Marquise | FIG. 1 | 55 | 50 | 175 | 330 |
| EX-1 | Hexagon | FIG. 2 | 33 | 18 | 104 | 200 |
| EX-2 | Hexagon | FIG. 2 | 33 | 12 | 69 | 350 |
| EX-3 | Hexagon | FIG. 2 | 33 | 19 | 110 | 248 |
| CE-2 | Circle | FIG. 7 | 33 | 18 | 104 | 200 |
| CE-3 | Circle | FIG. 7 | 33 | 18 | 104 | 200 |
| CE-4 | Circle | FIG. 8 | 30 | 18 | 109 | 340 |
| CE-5 | Circle | FIG. 8 | 30 | 18 | 104 | 330 |

### Coating the conductor layer and applying a veil

A first epoxy film ("epoxy(1)") was prepared by solvating the resin in AF 535XS LIGHTNING PROTECTION SURFACER in MEK (20 wt.%) and knife coating it onto a paper liner using a 4 mil (approximately 102 micrometer) knife gap. The film was then dried for 12 hours at room temperature. The epoxy(1) film, 4 gsm OPTIMAT T2570, and the conductor from EX-1 in Table 2 were vacuum laminated together at room temperature for 1 hour, to give an epoxy(1)/veil/conductor assembly. A second epoxy film ("epoxy(2)") was prepared by solvating the resin in AF 535XS LIGHTNING PROTECTION SURFACER in MEK (20 wt.%) and knife coating it onto a paper liner using a 2mil (approximately 51 micrometers) knife gap. The film was dried for 12 hours at room temperature. The epoxy(2) film was placed against the conductor layer of the epoxy(1)/veil/conductor assembly, and vacuum laminated at 25 inches of mercury (84.7 kPa) and room temperature for 1 hour to give an epoxy(1)/veil/conductor/epoxy(2) construct.

### Forming a cured composite panel

After removing the liner from the consolidated composite panel of the Preparative Example, the panel was laminated to the epoxy/veil/conductor assemblies made above at 25 inches of mercury (84.7 kPa) and room temperature for 1 hour to form a pre-cured panel. The panel was placed on an aluminum curing plate coated with FREKOTE 700NC, with the epoxy(1)/veil/conductor/epoxy(2) assembly having the epoxy(1) layer disposed against the FREKOTE 700NC coating on the aluminum plate. The consolidated panel was placed in a bag in an autoclave and a vacuum of approximately 28 inches mercury (94.8 kPa) was applied to the inside of the bag for 10 to 15 minutes at 72°F (22.2°C), after which the autoclave pressure was gradually increased to 55 psi (397 kPa). The vacuum inside the bag was maintained at 94.8 kPa and the temperature increased at a rate of 5°F (2.8°C) per minute until reaching 350°F (176.7°C). This temperature was held for 2 hours after which the temperature was returned to 72°F (22.2°C), the pressure released and the cured composite panel of Example 1 was removed from the vacuum bag.

### Example 2

The procedure for Example 1 was repeated, except that duration of electroplating in the copper solution was 51 minutes (instead of 77 minutes). The resulting conductor thickness and conductor weight was as listed in Table 2. The typical side length of the hexagonal shapes and spacing between the hexagonal shapes remained as in Example 1.

### Example 3

The procedure for Example 1 was repeated, except that duration of electroplating in the copper solution was 81 minutes (instead of 77 minutes). The resulting conductor thickness and conductor weight was as listed in Table 2. The typical side length of the hexagonal shapes and spacing between the hexagonal shapes remained as in Example 1.

### Comparative Example 1 (CE-1)

A layer of AF 535XS LIGHTNING PROTECTION SURFACER (which includes a 175 grams per square meter expanded copper foil having a "marquise" penetration shape) was consolidated onto a composite panel of the Preparative Example in a bag in an autoclave, under a vacuum of approximately 28 inches mercury (94.8 kPa) applied to the inside of the bag for 10 to 15 minutes at 72°F (22.2°C), after which the autoclave pressure was gradually increased to 55 psi (397 kPa). The vacuum inside the bag was maintained at 94.8 kPa and the temperature increased at a rate of 5°F (2.8°C) per minute until reaching 350°F (176.7°C). This temperature was held for 2 hours after which the temperature was returned to 72°F (22.2°C), the pressure was released, and the cured composite panel of Comparative Example 1 was removed from the vacuum bag.

### Comparative Examples 2 to 5 (CE-2 to CE-5)

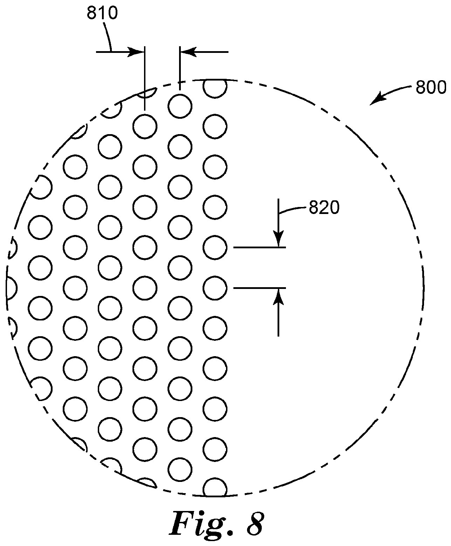

For CE-2 to CE-5, the procedure for Example 1 were repeated, except that the penetration shape was circular, and the conductor open area, conductor thickness, and conductor weight as listed in Table 2. For CE-2 and CE-3, the circular penetrations had a diameter of 0.0512 inch (approximately 1.3 mm) arranged in a square pattern (see FIG. 7), with a pitch of 0.0787 inch (approximately 2.0 mm). For CE-4 and CE-5, the circular penetrations had a diameter of 0.079 inch (approximately 2.0 mm), arranged in a staggered pattern (see FIG. 8), having a dimension 810 of 0.24 inch (approximately 6.1 mm), and, orthogonally, a dimension 820 of 0.14 inch (approximately 3.6 mm).

### Test specimen preparation

Each cured panel from CE-1, EX-1 to EX-3, and CE-2 and CE-5 was machined to 225 mm by 225 mm. The conductor face of each test specimen was primed with AVIOX CF PRIMER 37124 and painted with AVIOX FINISH 77702 URETHANE PAINT. The dry film paint thickness for each panel was as summarized in Table 2.

### Conduct High Current Physical Damage Tests

Testing was accomplished per the requirements of SAE ARP5416 Aircraft Lightning Test Methods section 5.2 High Current Physical Damage Tests, using current components as prescribed for Zone 2A and Zone 3 in SAE ARP5412 Aircraft Lightning Environment and Related Test Forms. Each discharge took place near the center point of each specimen. Key waveform characteristics were as listed in Table 3.

The depth of damage in the substrate and the affected damage area were determined on an ultrasonic microscope using a 15 MHz transducer. Test results are listed in Table 4. EX-2 resisted damage considerably better than the other samples, all having >325 micrometers of paint, even though the conductor in EX-2 was 40%-65% lighter weight. EX-3 resisted damage considerably better than the other samples, all having <250 micrometers of paint, even though the paint on EX-3 was 25% thicker.

**TABLE 3. Test Characteristics**

| **Sample** | **I_{A} (kA)** | **AIA (A².sec)** | **I_{B} (kA)** | **Ic (A)** | **Chargec (C)** | **Duration (msec)** |
|---|---|---|---|---|---|---|
| CE-1 | 100 | 0.260×10⁶ | 1.98 | 436 | 20.0 | 45.8 |
| EX-1 | 40 | 0.720×10⁵ | 2.00 | 475 | 19.2 | 40.4 |
| EX-2 | 100 | 0.258×10⁶ | 2.00 | 404 | 22.8 | 56.4 |
| EX-3 | 97 | 0.254×10⁶ | 2.00 | 443 | 21.4 | 48.2 |
| CE-2 | 100 | 0.252×10⁶ | 2.00 | 443 | 19.6 | 44.6 |
| CE-3 | 40 | 0.712×10⁵ | 2.02 | 412 | 20.6 | 50.0 |
| CE-4 | 99 | 0.256×10⁶ | 2.00 | 457 | 20.6 | 45.0 |
| CE-5 | 100 | 0.254×10⁶ | 2.02 | 487 | 19.0 | 39.0 |

**TABLE 4. Test Results**

| **Sample** | **Conductor Penetration Shape** | | **Conductor Open Area (%)** | **Conductor Weight (gsm**) | **Paint Thickness (□m)** | **Strike Zone** | **Damage Depth (mm)** | **Damage Area (cm²)** |
|---|---|---|---|---|---|---|---|---|
| CE-1 | Marquise | FIG. 1 | 55 | 175 | 330 | 2A | 1.7 | 93 |
| CE-4 | Circle | FIG. 8 | 30 | 109 | 340 | 2A | 1.7 | 91 |
| CE-5 | Circle | FIG. 8 | 30 | 104 | 330 | 2A | 1.7 | 95 |
| EX-2 | Hexagon | FIG. 2 | 33 | 69 | 350 | 2A | 0.8 | 28 |
| CE-2 | Circle | FIG. 7 | 33 | 104 | 199 | 2A | 0.8 | 4 |
| EX-3 | Hexagon | FIG. 2 | 33 | 110 | 248 | 2A | 0 | 0 |

Overall, these results show that conductors having hexagonal perforations provided significantly improved lightning strike protection, as reflected by reduced damage area and damage depth, compared to conductors with round perforations or marquise perforations (e.g., CE-1) for a given conductor weight.

The preceding description, given in order to enable one of ordinary skill in the art to practice the claimed disclosure, is not to be construed as limiting the scope of the disclosure, which is defined by the claims

## Claims

1. A lightning strike protection film (150, 350, 450) comprising:
an electrically-conductive layer (100, 300, 400) having a plurality of perforations (104 arranged in a hexagonal lattice pattern, wherein the perforations are generally hexagonal;
a support layer (110, 310, 410) coupled to the electrically-conductive layer (100, 300, 400); and
a carrier layer (352, 452) contacting the support layer (110, 310, 410), wherein the carrier layer (352, 452) is permeable and further wherein the carrier layer (352, 452) is disposed between the electrically-conductive layer (100, 300, 400) and an outer surface of the support layer (110, 310, 410).

2. The lightning strike protection film of claim 1, wherein the hexagonal lattice pattern and hexagonal perforations are each **characterized by** regular hexagons.

3. The lightning strike protection film of claim 1 or 2, wherein the perforations have an open area of from 10% to 95%.

4. The lightning strike protection film of any one of claims 1-3, wherein the electrically-conductive layer has a thickness of from 0.001 micrometers to 100 micrometers.

5. The lightning strike protection film of claim 1, wherein the electrically-conductive layer is at least partially embedded in the support layer.

6. The lightning strike protection film of claim 1 or 5, wherein the support layer comprises a curable resin.

7. The lightning strike protection film of claim 1 or 5, wherein the support layer comprises a thermoplastic.

8. A protected assembly (260) comprising the lightning strike protection film (150) of any one of claims 1-7 coupled to a non-conductive or semi-conductive composite.

9. A method of making a lightning strike protection film (150, 350, 450) comprising:
providing an electrically-conductive layer (100, 300, 400) having a plurality of perforations(104) arranged in a hexagonal lattice pattern, wherein the perforations are generally hexagonal;
providing a carrier layer (352, 452) on one side of the electrically-conductive layer (100, 300, 400), wherein the carrier layer is permeable;
coating a liquid resin onto the electrically-conductive layer (100, 300, 400) and the carrier layer (352, 452) to at least partially embed the electrically-conductive layer (100, 300, 400) and the carrier layer (352, 452) in the liquid resin; and
hardening the liquid resin to provide a support layer (110, 310, 410) coupled to the electrically-conductive layer (100, 300, 400) wherein the carrier layer (352, 452) is disposed between the electrically-conductive layer (100, 300, 400) and an outer surface of the support layer (110, 310, 410).

10. The method of claim 9, wherein providing the electrically-conductive layer comprises:
disposing discontinuous mask features on a release surface;
depositing an electrical conductor through the mask features and onto the release surface; and
separating the electrical conductor deposited on the release surface from the mask features to provide the electrically-conductive layer.

11. A method of protecting a substrate (235, 335, 435) from lightning strike damage using the lightning strike protection film (150, 350, 450) of claim 1-7, the method comprising:
providing an adhesive on either the substrate (235, 335, 435) or a major surface of the lightning strike protection film (150, 350, 450); and
using the adhesive to bond the lightning strike protection film (150, 350, 450) to the substrate (235, 335, 435).

12. A method of protecting a substrate (235, 335, 435) from lightning strike damage using the lightning strike protection film (150, 350, 450) of any one of claims 1-7, the method comprising:
providing a carrier layer (352, 452) of curable material;
adhering the lightning strike protection film (150, 350, 450) to a tool or pre-cured substrate composite material; and
curing the composite material and carrier layer (352, 452) concurrently to form a protected substrate (235, 335, 435).

## Patentansprüche

1. Ein Blitzschlagschutzfilm (150, 350, 450), aufweisend:
eine elektrisch leitfähige Schicht (100, 300, 400) mit einer Mehrzahl von Perforationen (104), die in einem sechseckigen Gittermuster angeordnet sind, wobei die Perforationen allgemein sechseckig sind;
eine Stützschicht (110, 310, 410), die mit der elektrisch leitfähigen Schicht (100, 300, 400) verbunden ist; und
eine Trägerschicht (352, 452), die die Stützschicht (110, 310, 410) berührt, wobei die Trägerschicht (352, 452) durchlässig ist und wobei ferner die Trägerschicht (352, 452) zwischen der elektrisch leitfähigen Schicht (100, 300, 400) und einer Außenoberfläche der Stützschicht (110, 310, 410) angeordnet ist.

2. Der Blitzschlagschutzfilm nach Anspruch 1, wobei das sechseckige Gittermuster und die sechseckigen Perforationen jeweils durch regelmäßige Sechsecke **gekennzeichnet sind.**

3. Der Blitzschlagschutzfilm nach Anspruch 1 oder 2, wobei die Perforationen eine offene Fläche von 10% bis 95% aufweisen.

4. Der Blitzschlagschutzfilm nach einem der Ansprüche 1-3, wobei die elektrisch leitfähige Schicht eine Dicke von 0.001 Mikrometern bis 100 Mikrometern aufweist.

5. Der Blitzschlagschutzfilm nach Anspruch 1, wobei die elektrisch leitfähige Schicht mindestens teilweise in die Stützschicht eingebettet ist.

6. Der Blitzschlagschutzfilm nach Anspruch 1 oder 5, wobei die Stützschicht ein härtbares Harz umfasst.

7. Der Blitzschlagschutzfilm nach Anspruch 1 oder 5, wobei die Stützschicht einen Thermoplast umfasst.

8. Eine geschützte Anordnung (260), die den Blitzschlagschutzfilm (150) nach einem der Ansprüche 1-7 aufweist, der mit einem nichtleitfähigen oder halbleitfähigen Verbundstoff verbunden ist.

9. Ein Verfahren zum Herstellen eines Blitzschlagschutzfilms (150, 350, 450), aufweisend:
Bereitstellen einer elektrisch leitfähigen Schicht (100, 300, 400) mit einer Mehrzahl von Perforationen (104), die in einem sechseckigen Gittermuster angeordnet sind, wobei die Perforationen allgemein sechseckig sind;
Bereitstellen einer Trägerschicht (352, 452) auf einer Seite der elektrisch leitfähigen Schicht (100, 300, 400), wobei die Trägerschicht durchlässig ist;
Aufbringen eines flüssigen Harzes auf die elektrisch leitfähige Schicht (100, 300, 400) und die Trägerschicht (352, 452), um die elektrisch leitfähige Schicht (100, 300, 400) und die Trägerschicht (352, 452) in dem flüssigen Harz mindestens teilweise einzubetten; und
Härten des flüssigen Harzes, um eine Stützschicht (110, 310, 410) bereitzustellen, die mit der elektrisch leitfähigen Schicht (100, 300, 400) verbunden ist, wobei die Trägerschicht (352, 452) zwischen der elektrisch leitfähigen Schicht (100, 300, 400) und einer Außenoberfläche der Stützschicht (110, 310, 410) angeordnet ist.

10. Das Verfahren nach Anspruch 9, wobei Bereitstellen der elektrisch leitfähigen Schicht aufweist:
Anordnen diskontinuierlicher Maskenmerkmale auf einer Ablöseoberfläche;
Abscheiden eines elektrischen Leiters durch die Maskenmerkmale und auf die Ablöseoberfläche; und
Trennen des elektrischen Leiters, der auf der Ablöseoberfläche abgeschieden ist, von den Maskenmerkmalen, um die elektrisch leitfähige Schicht bereitzustellen.

11. Ein Verfahren zum Schützen eines Substrats (235, 335, 435) vor Blitzschlagschäden unter Verwendung des Blitzschlagschutzfilms (150, 350, 450) nach Anspruch 1-7, wobei das Verfahren aufweist:
Bereitstellen eines Klebstoffs entweder auf dem Substrat (235, 335, 435) oder auf einer Hauptoberfläche der Blitzschlagschutzfilms (150, 350, 450); und
Verwenden des Klebstoffs, um den Blitzschlagschutzfilm (150, 350, 450) mit dem Substrat (235, 335, 435) zu verbinden.

12. Ein Verfahren zum Schützen eines Substrats (235, 335, 435) vor Blitzschlagschäden unter Verwendung des Blitzschlagschutzfilms (150, 350, 450) nach einem der Ansprüche 1-7, wobei das Verfahren aufweist:
Bereitstellen einer Trägerschicht (352, 452) aus härtbarem Material;
Anhaften des Blitzschlagschutzfilms (150, 350, 450) an einem Werkzeug oder vorgehärtetem Substratverbundmaterial; und
gleichzeitiges Härten des Verbundmaterials und der Trägerschicht (352, 452), um ein geschütztes Substrat (235, 335, 435) zu bilden.

## Revendications

1. Film de protection contre la foudre (150, 350, 450) comprenant:
une couche électroconductrice (100, 300, 400) ayant une pluralité de perforations (104 agencées dans un motif de treillis hexagonal, dans lequel les perforations sont généralement hexagonales;
une couche de support (110, 310, 410) couplée à la couche électroconductrice (100, 300, 400); et
une couche porteuse (352, 452) venant en contact avec la couche de support (110, 310, 410), dans lequel la couche porteuse (352, 452) est perméable et dans lequel en outre la couche porteuse (352, 452) est disposée entre la couche électroconductrice (100, 300, 400) et une surface externe de la couche de support (110, 310, 410).

2. Film de protection contre la foudre selon la revendication 1, dans lequel le motif de treillis hexagonal et les perforations hexagonales sont **caractérisés** chacun **par** des hexagones réguliers.

3. Film de protection contre la foudre selon la revendication 1 ou 2, dans lequel les perforations ont une aire ouverte allant de 10% à 95%.

4. Film de protection contre la foudre selon l'une quelconque des revendications 1-3, dans lequel la couche électroconductrice a une épaisseur allant de 0.001 micromètre à 100 micromètres.

5. Film de protection contre la foudre selon la revendication 1, dans lequel la couche électroconductrice est au moins partiellement noyée dans la couche de support.

6. Film de protection contre la foudre selon la revendication 1 ou 5, dans lequel la couche de support comprend une résine durcissable.

7. Film de protection contre la foudre selon la revendication 1 ou 5, dans lequel la couche de support comprend un thermoplastique.

8. Ensemble protégé (260) comprenant le film de protection contre la foudre (150) selon l'une quelconque des revendications 1-7 couplé à un composite non conducteur ou semi-conducteur.

9. Procédé de fabrication d'un film de protection contre la foudre (150, 350, 450) comprenant:
la fourniture d'une couche électroconductrice (100, 300, 400) ayant une pluralité de perforations (104) agencées dans un motif de treillis hexagonal, dans lequel les perforations sont généralement hexagonales;
la fourniture d'une couche porteuse (352, 452) sur un côté de la couche électroconductrice (100, 300, 400), dans lequel la couche porteuse est perméable;
le revêtement d'une résine liquide sur la couche électroconductrice (100, 300, 400) et la couche porteuse (352, 452) pour noyer au moins partiellement la couche électroconductrice (100, 300, 400) et la couche porteuse (352, 452) dans la résine liquide; et
le durcissement de la résine liquide pour fournir une couche de support (110, 310, 410) couplée à la couche électroconductrice (100, 300, 400) dans lequel la couche porteuse (352, 452) est disposée entre la couche électroconductrice (100, 300, 400) et une surface externe de la couche de support (110, 310, 410).

10. Procédé selon la revendication 9, dans lequel la fourniture de la couche électroconductrice comprend:
la mise en place des caractéristiques de masque discontinues sur une surface antiadhésive;
le dépôt d'un conducteur électrique à travers les caractéristiques de masque et sur la surface antiadhésive; et
la séparation du conducteur électrique déposé sur la surface antiadhésive par rapport aux caractéristiques de masque pour fournir la couche électroconductrice.

11. Procédé de protection d'un substrat (235, 335, 435) contre un dommage de la foudre en utilisant le film de protection contre la foudre (150, 350, 450) selon la revendication 1-7, le procédé comprenant:
la fourniture d'un adhésif sur l'un ou l'autre du substrat (235, 335, 435) ou d'une surface principale du film de protection contre la foudre (150, 350, 450); et
l'utilisation de l'adhésif pour lier le film de protection contre la foudre (150, 350, 450) au substrat (235, 335, 435).

12. Procédé de protection d'un substrat (235, 335, 435) contre un dommage de la foudre en utilisant le film de protection contre la foudre (150, 350, 450) selon l'une quelconque des revendications 1-7, le procédé comprenant:
la fourniture d'une couche porteuse (352, 452) de matériau durcissable;
l'adhésion d'un film de protection contre la foudre (150, 350, 450) à un outil ou matériau composite de substrat prédurci; et
le durcissement simultané du matériau composite et de la couche porteuse (352, 452) pour former un substrat protégé (235, 335, 435).
